# EUROPEAN PATENT APPLICATION

(11) **EP 1 614 639 A1**
(43) Date of publication of application: **11.01.2006**
(21) Application number: 04254130.0
(22) Date of filing: 09.07.2004
(51) Int. Cl.: B65D 75/58, B65D 75/26, B65D 75/08

(54) **Packaged confectionery products**

(71) Applicant: WM. WRIGLEY JR. COMPANY, Chicago, Illinois 60611-4287 (US)
(72) Inventor: Connolly, Eric Thomas, Wiltshire 3N8 3DW Marlborough (GB); Maskell, William John, London N11 3SN (GB)
(74) Representative: Hayes, Adrian Chetwynd

(57) **Abstract**

A packaged confectionery product (10,24,42) is provided. The packaged confectionery product includes a confectionery product (22,36,50) and a package material (16,26,46) formed around the confectionery product. The package material, such as a laminate (52,108,114), includes one or more scored regions (12,32,48) allowing ready access of the confectionery product, such as single-handed access of the confectionery product wherein an underlayer of the packaging material (52,108,114) including, for example, a metal layer, remains unscored to promote product integrity.

## Description

### BACKGROUND OF THE INVENTION

The present invention relates to confectionery products. More specifically, the present invention relates to packaged confectionery products and methods of producing and using same.

A variety of edible products including confectionery products are known and used. Confectionery products typically refer to edible products that are sweet, such as candy, chewing gum, and other sugar or sweetener-containing compositions. A variety of confectionery products are commercially available. These products include, for example, hard candies, mints, chewing gum, both sugarless and sugar-containing, bubble gum, gummi candies, liquid candies, powdered candies and the like. The variety and types of confectionery products continue to evolve and grow.

For example, chewing gum products have been provided for a great number of years. Chewing gum generally includes an insoluble gum base and a water soluble portion. The water soluble portion provides a flavor and sweetener. Chewing gum can be manufactured in a number of different shapes including, for example, rolled tape, sticks, pellets, chunks, shredded chew, cigar-shaped or other suitable shapes.

Hard candy, for example, is generally made by adding water to a mixture of sugar and corn starch under a suitable cooking temperature. The hard candy can be formed into a variety of different shapes and sizes including, for example, lozenge-shaped, ring-shaped, spherical, rectangular and the like.

Once formed, the confectionery product can be packaged in a variety of suitable manners. In general, the confectionery package can be formed into a number of different shapes and sizes depending on the type of confectionery product that is packaged. Hard candies, for example, can be individually wrapped in a plastic-type package material. Alternatively, a single bag-shaped or pouch-shaped package can be used to package a number of pieces of hard candy that are wrapped and/or unw/rapped and formed into a desired shape, such as a spherical shape.

Confectionery products are also packaged in a roll-type configuration. To access these types of products, a portion of the package is typically removed by tearing or cutting the roll-packaged material, and once removed, an individual piece of the roll-packaged product can be accessed for use. However, this typically requires the use of two hands. That is, one hand is typically used to hold or support the roll-packaged product where the remaining free hand is used to remove the package material and access the confectionery product. Thus, a user may encounter difficulties in attempting to access this type of packaged confectionery good, particularly if the user does not have both hands free from use which may be a common occurrence in today's society considering the growing use of hand-held consumer products, such as hand-held cellular products.

A need, therefore, exists to provide improved packaged confectionery products that can facilitate use and enjoyment of same.

### SUMMARY OF THE INVENTION

The present invention relates to improved confectionery products. In particular, the present invention relates to packaged confectionery products and methods of producing and using same.

The packaged confectionery products of the present invention can facilitate the use and enjoyment of same. For example, the confectionery package includes one or more scored regions cut to a depth that penetrates at least a portion of an outer layer while effectively leaving at least a portion of the remaining inner layer in tact for product integrity purposes. This allows the user to readily access the confectionery product, such as accessing a piece or multiple pieces of a candy roll with the use of single hand.

To this end, in an embodiment, a packaged confectionery product is provided. The packaged confectionery product includes a confectionery product and a package material formed around the confectionery product wherein the package material includes one or more scored regions, thus allowing ready access of the confectionery product. The package material includes a metal barrier underlayer that remains unscored for product integrity purposes.

In an embodiment, the package material is scored via a laser cut.

In an embodiment, the package material is scored via a die cut.

In an embodiment, the confectionery product includes a plurality of pieces packaged in a rolled-configuration.

In an embodiment, the package material includes a laminate with an outer layer that provides structural integrity and an inner layer including the metal barrier underlayer that provides product integrity.

In an embodiment, the outer layer is cut to a depth effective to allow accessibility of the confectionery product with a single hand.

In another embodiment, a method of producing a packaged confectionery product is provided. The method includes providing a laminate material having a plurality of scored regions wherein the laminate material includes an inner layer that includes an unscored metal layer; and packaging a confectionery product with the laminate material thereby allowing a user to access the confectionery product with a single hand.

In an embodiment, the laminate material is scored via a laser cut.

In an embodiment, the laser cut is performed after lamination of the laminate material.

In an embodiment, the laminate material is scored via a die cut.

In an embodiment, the die cut is conducted prior to lamination of the laminate material.

In an embodiment, the packaged confectionery product is formed into a roll pack.

In an embodiment, the outer layer is scored to an effective depth to form the scored regions while the inner layer remains in tact to maintain product integrity.

In an embodiment, the outer layer is printable.

In an embodiment, the outer layer is transparent and the inner layer is printable.

In a further embodiment, a method of preparing a confectionery package material is provided. The method includes forming a laminate having a plurality of laminate layers including an outer layer and an inner layer wherein at least a portion of the outer layer is scored to an effective depth allowing single-handed access of a confectionery product packaged with the laminate, and wherein the inner layer includes a metal barrier layer that remains unscored to promote product integrity.

In an embodiment, the laminate is scored to form one or more slits spaced apart along a least a portion of the outer layer.

In an embodiment, the outer layer is scored after lamination of the laminate layers.

In an embodiment, the outer layer is scored via a laser cutting process.

In an embodiment, the outer layer is scored prior to lamination of the laminate layers.

In an embodiment, the outer layer is scored via a die cutting process or a laser cutting process.

In an embodiment, the confectionery package material is used to package the confectionery product in a rolled-configuration.

In an embodiment, the outer layer is printable.

In an embodiment, the outer layer is transparent and the inner layer includes a first layer that is printable and adjacent to the outer layer.

It is an advantage of the present invention to provide improved confectionery products.

Moreover, an advantage of the present invention is to provide improved packaged confectionery products and methods of producing and using same.

Furthermore, an advantage of the present invention is to provide a packaged confectionery product that can be readily accessed.

Another advantage of the present invention is to provide methods of scoring a packaged confectionery product allowing for single-handed access of the confectionery product while maintaining product integrity.

Further, an advantage of the present invention is to provide improved confectionery packaging that facilitates the use and enjoyment of the packaged confectionery product.

Additional features and advantages of the present invention are described in, and will be apparent from, the detailed description of the presently preferred embodiments and the drawings.

### BRIEF DESCRIPTION OF THE DRAWINGS

Figure 1 illustrates a perspective view of a packaged confectionery product according to an embodiment of the present invention.
Figures 2A, 2B and 2C illustrate perspective views of a packaged confectionery product showing how the product can be readily accessed according to an embodiment of the present invention.
Figure 3 illustrates a partial sectional view of a packaged confectionery product according to an embodiment of the present invention.
Figure 4A illustrates a schematic view of a process for producing a confectionery product package that is scored after lamination according to an embodiment of the present invention. Figure 4B illustrates a sectional view of a laminate with a scored region made pursuant to the process illustrated in Figure 4A.
Figure 5A illustrates a schematic view of a process for producing a scored confectionery product package that is scored prior to lamination according to an embodiment of the present invention. Figure 5B illustrates a sectional view of a laminate with a scored region made pursuant to the process illustrated in Figure 5A.
Figure 6A illustrates a schematic view of a process for producing a confectionery product package that is scored prior to lamination according to another embodiment of the present invention. Figure 6B illustrates a sectional view of a laminate with a scored region made pursuant to the process illustrated in Figure 6A.

### DETAILED DESCRIPTION OF THE INVENTION

The present invention generally relates to confectionery products. More specifically, the present invention relates to packaged confectionery products and methods of producing and using same.

In general, the confectionery package of the present invention includes one or more scored regions. The scored regions allow ready and easy access of the packaged confectionery product. For example, the present invention allows a user to readily access a piece or multiple pieces of a packaged confectionery product roll with the use of a single hand. Thus, the packaged confectionery products of the present invention can facilitate the use and enjoyment of same.

The packaged confectionery products of the present invention can be made from any suitable materials and manufactured in any suitable manner. For example, the confectionery product can include any suitable type, size and shape of confectionery products including a variety of commercially-available confectionery products, such as hard candies, mints, chewing gum, both sugarless and sugar-containing, bubble gum, gummi candies, liquid candies, powdered candies and the like.

In general, the confectionery package includes an outer layer and an inner layer. The outer layer provides structural integrity where the inner layer acts to promote product integrity. In an embodiment, the outer layer is scored to an effective depth to allow ready access of the package confectionery product where the inner layer including, for example, a metal layer, remains unscored or at least a portion thereof for product integrity purposes. The packaging material can be scored in any suitable manner, such as by die cutting, laser cutting and/or the like. It should be appreciated that the outer layer and the inner layer can be composed of one or more layers. The packaging layers can define separate packaging layers, a laminated structure and/or the like.

In an embodiment, the confectionery package of the present invention includes a laminate material. The laminate material includes a number of layers, such as an outer layer and an inner layer that can be made of a variety of different materials. In general, the outer layer acts to provide structural integrity to the laminate wherein the inner layer can facilitate product integrity by, for example, acting as a barrier to moisture, air and other potential product contaminants as previously discussed.

In an embodiment, the laminate material includes a three-layered structure. The first or outer layer includes a printable substrate, such as a paper-based material or other suitable printable material. At least of portion of the outer layer is scored to facilitate access of the confectionery product. This can occur after lamination of the laminate material as described in greater detail below. The second and third layers define the inner layer applied to the outer layer. The second layer includes a material capable of acting as a barrier to moisture, air and/or the like for product integrity purposes. This material can include, for example, a thin metal layer, such as a metal foil layer composed of any suitable metal component(s). The third layer includes a heat sealing layer, gluing layer, or the like made from any suitable material that can act to facilitate the lamination process. In an embodiment, the inner layer or at least a portion thereof remains unscored to facilitate product integrity.

In another embodiment, the outer layer of the laminate material includes a transparent material made from a plastic material or other suitable material, such as a printable substrate. The inner layer includes a first inner layer that can include a printable substrate that also acts to provide product integrity or other suitable material including printable or non-printable. The second inner layer includes a heat sealing, gluing or other suitable material layer as previously discussed. The transparent outer layer is scored in at least a portion thereof to facilitate use of the packaged confectionery product. This can occur prior to lamination of the layered laminate material as described in greater detail below. In an embodiment, the inner layer or at least a portion thereof remains unscored as previously discussed.

The confectionery package can be made in any suitable manner. For example, the laminate layers can be bonded or applied together in sequence to form the layered laminate material under suitable temperature, pressure and other suitable process conditions. As previously discussed, the outer layer of the laminate material is scored in at least a portion thereof. The scoring process can occur after and/or prior to lamination of the layered laminate material. In an embodiment, the laminate material is scored by a laser cut process, a die cut process or the like. This provides precision scoring of the laminate to an effective depth that allows ready access of the confectionery product packaged within the laminate while at the same time maintaining product integrity where at least a portion of the inner layer remains unscored.

The scoring process produces one or more score regions on at least a portion of the outer layer. The score regions can include any suitable shape, size, length and otherwise-dimension. In an embodiment, the score regions are formed into a number of slits that are spaced apart along a surface of the outer layer. By way of example and not limitation, the present invention with now be described with reference to the examples as shown in the figures.

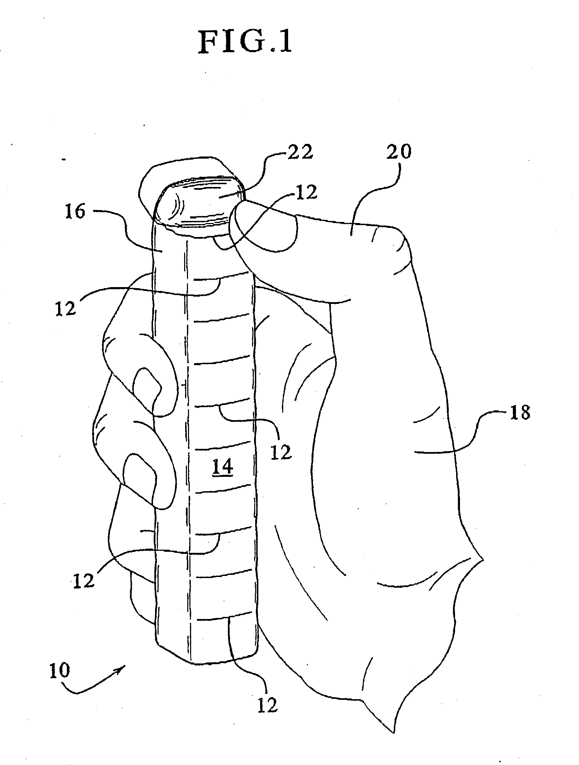

Referring to Figure 1, the present invention includes a packaged confectionery product 10 that is formed into a rolled-configuration, such as any suitable candy roll. The packaged confectionery product 10 includes a number of score regions 12 that are spaced apart on a surface 14 in a lengthwise direction along the confectionery package 16. The score regions 12 are formed on at least a portion of one side of the confectionery package 16. This allows the packaged confectionery product 10 to be readily accessed. As shown in Figure 1, the packaged confectionery product 10, in an embodiment, can be readily accessed with the use of a single hand 18.

For example, a thumb 20 can be used to depress the confectionery package 16 at or in the vicinity of a score region 12 that acts to weaken the structural integrity of the package 16 for accessibility purposes. This allows one or a multiple number of pieces 22 of the confectionery product to be readily accessed. In an embodiment, the score region 12 can be formed into one or more slits or cuts as shown in Figure 1. It should be appreciated that the score regions can be formed into any suitable shape and/or size and include any suitable number and positioning thereof depending on the desired application.

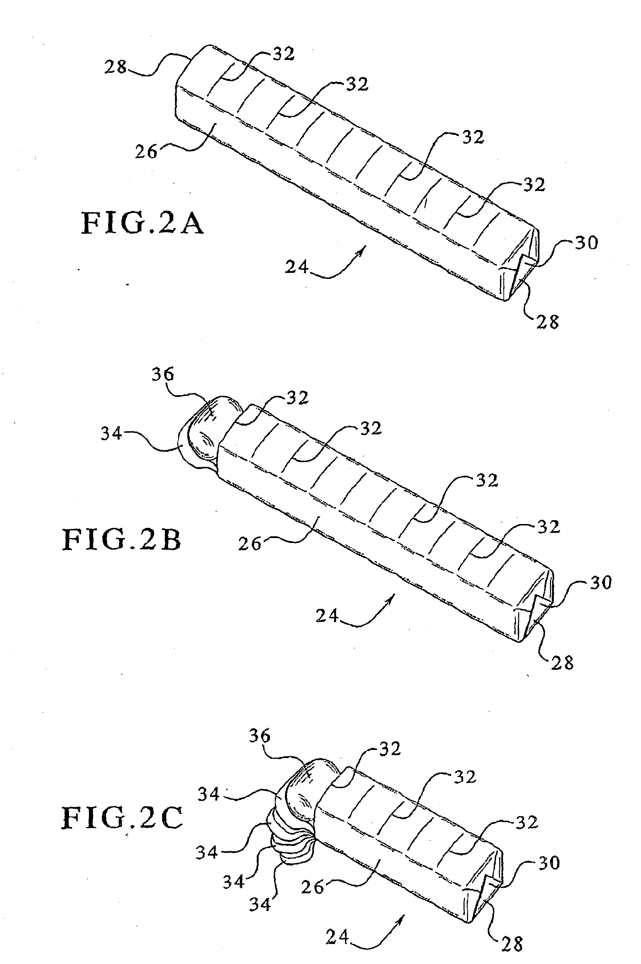

Figures 2A, 2B and 2C further illustrate how the packaged confectionery can be readily opened to access one or a multiple number of confectionery pieces pursuant to an embodiment of the present invention. In Figure 2A, a packaged confectionery product 24 of the present invention is shown in a closed configuration. The confectionery package 26 is sealed at both ends 28 in a folded manner 30. It should be appreciated that the confectionery package 26 can be formed and sealed around the confectionery product in any suitable manner depending on the type of confectionery product and application thereof. The package 26 includes a number of slit regions 32 that have been cut to an effective depth to allow ready access to the confectionery product (not shown) within the package 26.

As shown in Figure 2B, a section 34 of the confectionery package 26 has been opened at or near one of a slit region 32 that acts to weaken the structural integrity of the package as previously discussed. Once opened, a confectionery piece 36 can be readily removed with the use of a single hand (not shown). The opened section 34 of the packaging 26 that remains can hang therefrom even after the confectionery piece 36 has been removed. As shown in Figure 2C, a multiple number of confectionery pieces can be readily accessed and removed from the package 26 in a similar manner. This demonstrates that the opened sections 34 of the package 26 do not necessarily have to be discarded until all or at least a portion of the pieces have been removed.

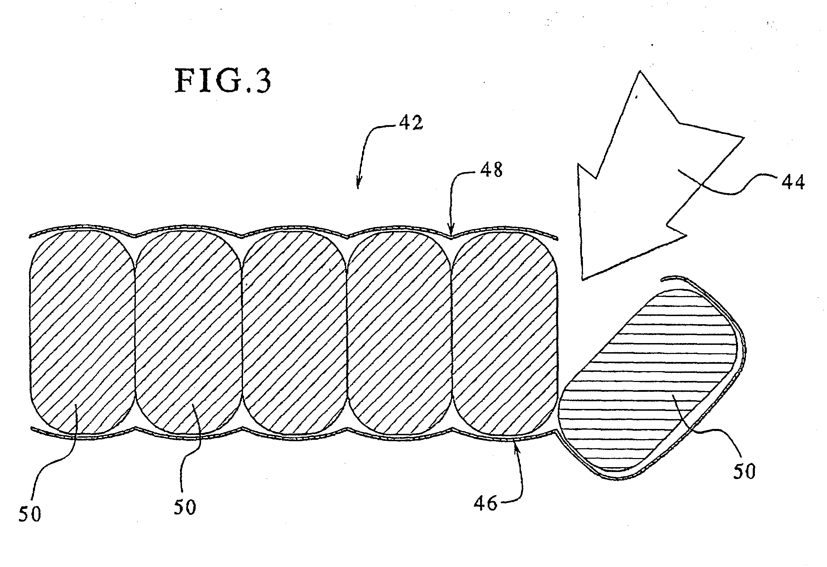

Fig. 3 illustrates a partial sectional view of a packaged confectionery product 42. This further illustrates a mechanism by which the packaged confectionery product 42 can be readily accessed pursuant to an embodiment of the present invention. An applied force 44, such as from a user's thumb (not shown), can cause the product package 46 to break at or in proximity to a region that has been weakened due to the presence of a score or cut 48 in the package 46 at an effective depth. This allows ready access to one piece of the confectionery 50 essentially without having to further tear the package to remove the confectionery piece. One or more of the other pieces 50 can be readily removed in a similar manner. Once all of the pieces are removed, the confectionery package 46 can be discarded as waste in its entirety or substantially so.

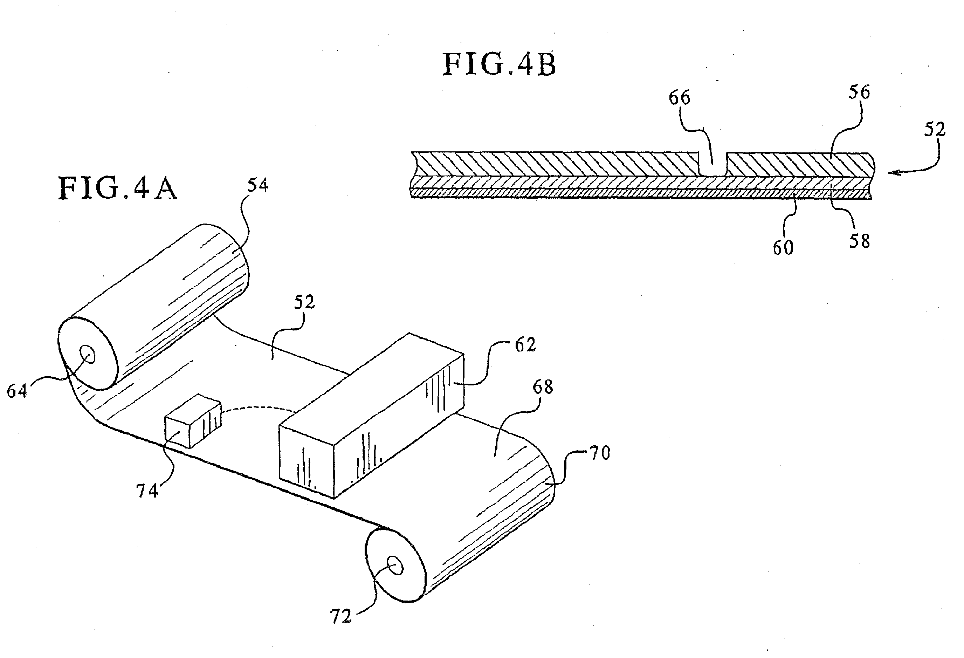

As previously discussed, the packaged confectionery product with scored regions can be manufactured in any suitable manner. In an embodiment, the scored regions can formed on a laminate material of the confectionery package after the laminate material has been formed. As shown in Figs. 4A and 4B, the laminate material 52 is formed into a sheet roll 54 for scoring purposes. The laminate material 52 includes a three layered structure with an outer or first layer 56, a barrier layer for product integrity 58 and a heat sealing layer or gluing layer 60 wherein the layers are applied together to form the laminate material 52 as illustrated in Fig. 4B. The outer layer includes a substrate with printed material, such as brand name or other material associated with the packaged confectionery.

The laminate sheet roll 54 is unwound and fed to a laser cutter 62, such as a multiple head laser cutter or other suitable laser device. As the laminate sheet roll 54 unwinds from a reel 64, the laser cutter 62 acts to score the laminate material 52 at a depth effective to allow ready access of a confectionery product packaged with the laminate material. In an embodiment, the scored region forms a slit 66 to a depth that penetrates at least a portion of the outer layer 56 while the inner layers 58, 60 remain essentially uncut, thus continuing to act as an effective barrier to maintain product integrity as shown in Fig. 4B. As the laminate sheet roll 54 unwinds and is scored, the scored laminate material 68 is rewound into another sheet roll 70 via a rewound recl 72. The scoring process can be automated via any suitable controller 74, such as a registration controller, as shown in Fig. 4A.

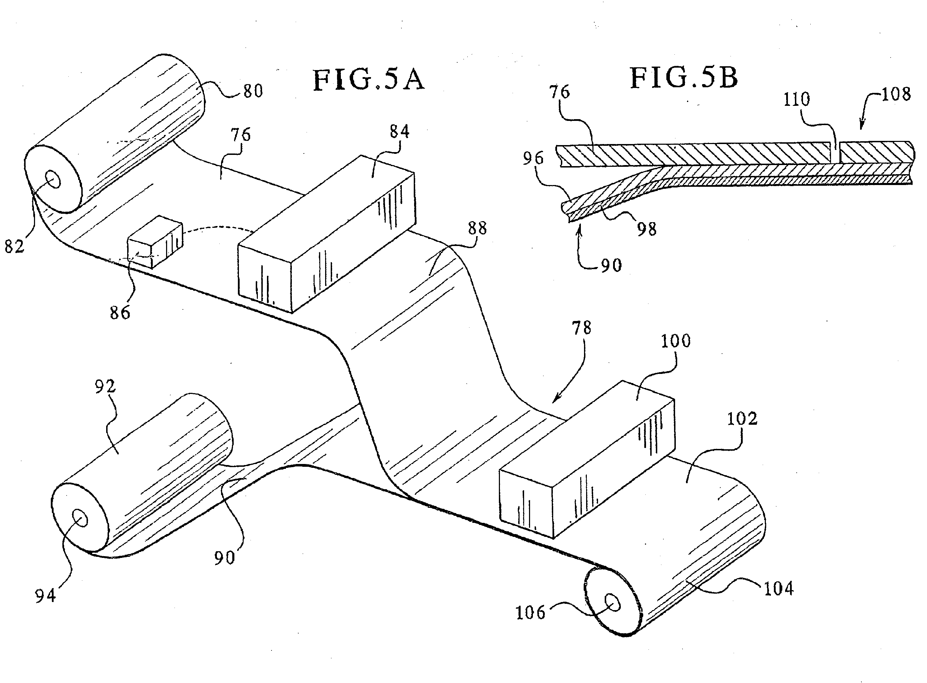

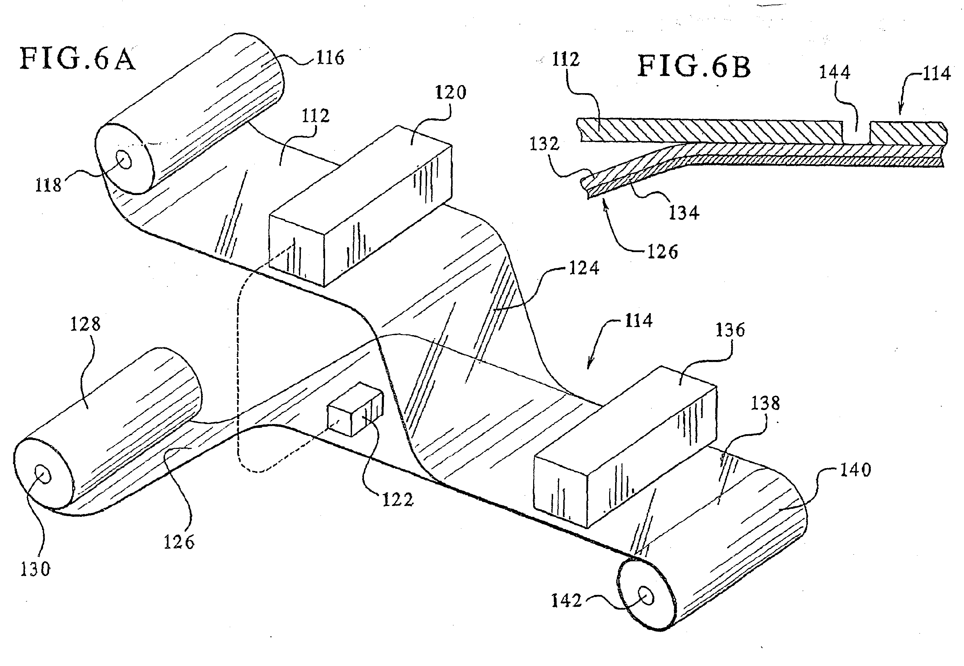

As shown in Figs. 5A, 5B, 6A and 6B, the scoring process can be conducted prior to lamination of all or at least a portion of the laminate layers. In general, the outer layer can be scored and then applied to the inner layer subsequent to scoring. In an embodiment, the scoring process is conducted via die cutting (Figs. 5A and 5B) or laser cutting (Figs. 6A and 6B).

As shown in Fig. 5A, an outer layer 76 of the laminate material 78 is formed into a sheet roll 80 and fed via a roller 82 for scoring processing. The outer layer 76 is scored using a-die cutter 84, such as a multiple die cutter or any suitable die cutting device or instrumentation. The outer layer 76 includes a printable paper substrate or other suitable printable material as shown in Fig. 5B. The scoring process can be automated via a controller 86, such as a registration controller.

Once scored, the outer layer material 88 is then fed to meet the inner layer 90 that has been unwound from a sheet roll 92 via a reel 94. As shown in Fig. 5B, the inner layer 90 includes a two-layered structure composed of a product integrity barrier material 96, such as a metal foil material or the like, applied to a heat sealing or gluing layer 98. The scored outer layer 88 is then bonded to the inner layer 90 via any suitable laminating press 100. The formed laminate 102 is then rewound into a sheet roll 104 onto a reel 106. As shown in Fig. 5B, the layered laminate 108 is scored 110 to a depth effective to facilitate access of the confectionery product while maintaining a product integrity barrier as previously discussed.

As shown in Fig. 6A, an outer layer 112 of the laminate material 114 is formed into a sheet roll 116 and fed via a roller 118 for scoring processing. The outer layer 112 is scored using a die cutter 120, a laser cutter, multiple head die or laser cutters or any suitable cutting device or instrumentation. The outer layer 112 includes a plastic film material that is transparent as shown in Fig. 6B. The scoring process can be automated via a controller 122, such as a registration controller.

Once scored, the outer layer material 124 is then fed to meet the inner layer 126 that has been unwound from a sheet roll 128 via a reel 130. As shown in Fig. 6B, the inner layer 126 includes a two-layered structure composed of a printed layer 132 that can also act as a barrier to maintain product integrity applied to a heat sealing or gluing layer 134. The scored outer layer 124 is then bonded to the inner layer 126 via any suitable laminating press 136. The formed laminate 138 is then rewound into a sheet roll 140 onto a reel 142. As shown in Fig. 6B, the layered laminate 114 is scored to a depth effective to facilitate access of the confectionery product while maintaining product integrity as previously discussed.

It should be understood that various changes and modifications to the presently preferred embodiments described herein will be apparent to those skilled in the art. Such changes and modifications can be made without departing from the spirit and scope of the present invention and without diminishing its intended advantages. It is therefore intended that such changes and modifications be covered by the appended claims.

## Claims

1. A packaged confectionery product comprising:
a confectionery product and a package material formed around the confectionery product, the package material having one or more scored regions allowing ready access of the confectionery product wherein the package material includes a metal barrier underlayer that is unscored.

2. The packaged confectionery product of claim 1 wherein the package material is scored via a laser cut.

3. The packaged confectionery product of claim 1 wherein the package material is scored via a die cut.

4. The packaged confectionery product of any one of the preceding claims wherein the confectionery product includes a plurality of pieces packaged in a rolled configuration.

5. The packaged confectionery product of any one of the preceding claims wherein the package material includes a laminate with an outer layer that provides structural integrity and an inner layer that includes the unscored metal barrier underlayer to promote product integrity.

6. The packaged confectionery product of claim 5 wherein the outer layer is scored to a depth effective to allow accessibility of the confectionery product with a single hand.

7. A method of producing a packaged confectionery product comprising:
providing a laminate material having a plurality of scored regions wherein the laminate material includes an inner layer that includes an unscored metal layer: and
packaging a confectionery product with the laminate material thereby allowing a user to access the confectionery product with a single hand.

8. The method of claim 7 wherein the laminate material is scored via a laser cut.

9. The method of claim 8 wherein the laser cut is performed after lamination of the laminate material.

10. The method of claim 7 wherein the laminate material is scored via a die cut.

11. The method of claim 10 wherein the die cut is conducted prior to lamination of the laminate material.

12. The method of any one of claims 7 to 11 wherein the laminate includes an outer layer that acts to provide structural support.

13. The method of claim 12 wherein the outer layer is scored to an effective depth to form the scored regions while the inner layer remains in tact to maintain product integrity.

14. The method of claim 13 wherein the outer layer is printable.

15. The method of claim 13 wherein the outer layer is transparent and the inner layer is printable.

16. A method of preparing a confectionery package material comprising:
forming a laminate having a plurality of laminate layers including an outer layer and an inner layer wherein at least a portion of the outer layer is scored to an effective depth allowing single-handed access of a confectionery product packaged with the laminate, and wherein the inner layer includes a metal layer that remains unscored to promote product integrity.

17. The method of claim 16 wherein the laminate is scored to form one or more slits spaced apart along at least a portion of the outer layer.

18. The method of claim 16 or 17 wherein the outer layer is scored after lamination of the laminate layers.

19. The method of claim 16 or 17 wherein the outer layer is scored prior to lamination of the laminate layers.

20. The method of any one of claims 16 to 19 wherein the outer layer is scored via a cutting process selected from the group consisting of a die cutting process and a laser cutting process.

21. The method of any one of claims 16 to 20 wherein the confectionery package material is used to package the confectionery product in a rolled configuration.

22. The method of any one of claims 16 to 21 wherein the outer layer is printable.

23. The method of any one of claims 16 to 21 wherein the outer layer is transparent and the inner layer includes a first layer that is printable and adjacent to the outer layer.
